# EUROPEAN PATENT APPLICATION

(11) **EP 3 644 103 A1**
(43) Date of publication of application: **29.04.2020**
(21) Application number: 18819940.0
(22) Date of filing: 15.06.2018
(51) Int. Cl.: G02B 6/36, G02B 6/38

(54) **MANAGEMENT DEVICE AND SYSTEM FOR OPTICAL FIBER CONNECTOR**

(30) Priority: 22.06.2017 CN 201710481643
(71) Applicant: ZTE Corporation, Shenzhen, Guangdong 518057 (CN)
(72) Inventor: XU, Jidong, Shenzhen Guangdong 518057 (CN); HAO, Xiangyong, Shenzhen Guangdong 518057 (CN)
(74) Representative: Petraz, Gilberto Luigi
(86) International application number: PCT/CN2018/091432
(87) International publication number: WO 2018/233557

(57) **Abstract**

Disclosed are a management device for a removable optical fiber connector and a management system for the same. The device includes a housing substrate of the optical fiber connector as well as an electronic tag. The electronic tag includes an antenna, an integrated chip and an indication load. The integrated chip and the indication load are embedded on the housing substrate. The integrated chip is provided with a load interface. The indication load is connected to the integrated chip by means of the load interface. The antenna covers one or more pre-selected surfaces on the housing substrate and is connected to the integrated chip.

## Description

### Field of the Invention

The present disclosure relates to the technical field of optical distribution network, and in particular, to a management device for a removable optical fiber connector and a management system for the same.

### Background of the Invention

With the development of optical networks, fiber optic apparatuses have increased exponentially. ODN (optical distribution network) management becomes more and more complicated. Especially, in the management of optical fibers, there are dense optical fibers on a passive ODN frame, which makes it very difficult to find a specific optical fiber.

In the traditional ODN optical fiber management, a paper tag is added to each optical fiber, and maintenance personnel look for a corresponding optical fiber by manually viewing the paper tag. However, the life of the paper tag is not long. This is because writing on the paper tag easily becomes illegible, and it is easy for the paper tag to fall off. Since manual checking for each paper tag is needed, an omission error may be caused, and a time length of the checking is also indefinite. If there are multiple optical fibers to be detected, it will cost a great deal of labor and time.

In view of the shortcomings of the traditional management, in the existing ODN optical fiber management, there is a main control board at each port of the passive ODN frame, and each optical fiber is provided with an electronic tag (eTag). After the optical fiber is inserted into a port, the eTag should also be inserted into the corresponding port. A corresponding optical fiber is determined by an indicator light at the port, so that quickly finding an optical fiber can be facilitated. However, shortcomings of the existing ODN optical fiber management are also very obvious. First, a passive ODN needs to be changed to an active ODN to supply power to the main control board, and therefore the existing ODN optical fiber management is not suitable for retrofitting an old ODN and is only suitable for a new ODN. Secondly, the usage habit of ODN users is changed. When the optical fiber is inserted, the eTag also needs to be inserted, which increases the workload and increases the possibility of errors. In addition, when the optical fiber is not inserted into the port of the ODN frame, the optical fiber cannot be identified.

Therefore, there is a great need for a new type of intelligent ODN technology, which makes the ODN remain passive and is able to quickly identify a specific optical fiber regardless of whether the optical fiber is inserted into a port or not.

### Summary of the Invention

A summary of the subject matter described in detail herein is provided below. The summary is not for limiting the protection scope of the claims.

With regard to the shortcomings of the active ODN management method, the present disclosure provides a management device for a removable optical fiber connector and a management system for a removable optical fiber connector.

An embodiment of the present disclosure provides a management device for a removable optical fiber connector. The device includes a housing substrate of the optical fiber connector as well as an electronic tag. The electronic tag includes an antenna, an integrated chip and an indication load. The integrated chip and the indication load are embedded on the housing substrate. The integrated chip is provided with a load interface. The indication load is connected to the integrated chip by means of the load interface. The antenna covers one or more pre-selected surfaces on the housing substrate and is connected to the integrated chip.

An embodiment of the present disclosure provides an optical fiber management system. The system includes a plurality of management devices for a removable optical fiber connector as described above, a plurality of optical fiber connectors and a reader-writer;
wherein each optical fiber is correspondingly provided with two optical fiber connectors, either of which is correspondingly provided with one management device for a removable optical fiber connector; and
the reader-writer is configured to transmit energy and a control instruction to respective management devices for a removable optical fiber connector.

After the accompanying drawings and the detailed description are read and understood, other aspects may be understood.

### Brief Description of the Drawings

Fig. 1 is a schematic diagram of a structure of a management device for a removable optical fiber connector in an embodiment of the present disclosure;
Fig. 2 is a schematic diagram of a structure of an existing optical fiber connector in an embodiment of the present disclosure;
Fig. 3 to Fig. 5 are respectively schematic diagrams of a structure of three surfaces of an integrated optical fiber connector housing in an embodiment of the present disclosure;
Fig. 6 is a schematic diagram of a load interface of an RFID chip in an embodiment of the present disclosure;
Fig. 7 is a schematic diagram of connection between an RFID chip and a light emitting diode LED in an embodiment of the present disclosure;
Fig. 8 is a schematic diagram of a layout of an optical fiber management system in an embodiment of the present disclosure; and
Fig. 9 and Fig. 10 are work flow diagrams of the optical fiber management system in an embodiment of the present disclosure.

### Detailed Description of the Embodiments

With regard to the shortcomings of the active ODN management method, the present disclosure provides a management device for a removable optical fiber connector and a management system for a removable optical fiber connector. The present disclosure will be explained in detail with reference to the embodiments and the accompanying drawings. Embodiments described herein are used only for explaining the present disclosure, not for limiting the present disclosure.

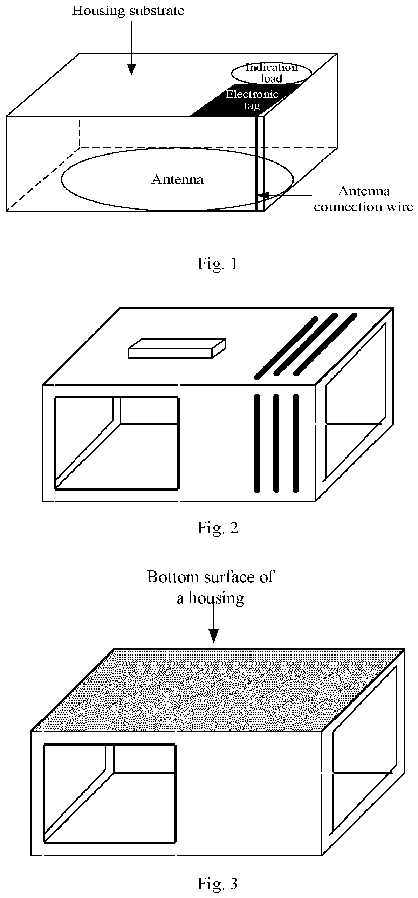

Fig. 1 shows a management device for a removable optical fiber connector in an embodiment of the present disclosure. The device includes a housing substrate of the optical fiber connector as well as an electronic tag. The electronic tag includes an antenna, an integrated chip and an indication load. The integrated chip and the indication load are embedded on the housing substrate. The integrated chip is provided with a load interface. The indication load is connected to the integrated chip by means of the load interface. The antenna covers one or more pre-selected surfaces on the housing substrate and is connected to the integrated chip.

The device in the present embodiment enables a passive electronic tag to acquire energy by means of the antenna, receive a control instruction of a reader-writer based on the acquired energy, and lighten or turn off the indication load according to the control instruction. In this way, a position of an optical fiber can be indicated by means of the indication load; a dumb resource of an optical fiber connection head is changed to a bright resource that can be detected any time; and a millimeter-scale precise positioning can be made to a position of the optical fiber connection head. Accordingly, the shortcomings of the active ODN management method can be effectively solved. Passivity of an original ODN and a habit of optical fiber insertion and pullout of a user can be kept, and time and labor costs can be saved. For example, there is no need to equip a main control board for each port of a passive ODN frame, and therefore, retrofitting can be made to an old ODN. The circumstance that an eTag should also be inserted when an optical fiber is inserted can be avoided, which reduces a workload and reduces the possibility of errors. Besides, when the optical fiber is not inserted into a port of the ODN frame, the optical fiber can also be identified.

Based on the above embodiment, modified embodiments of the above embodiment are also presented. In order to make the description brief, only differences of respective modified embodiments from the above embodiment are described.

In one embodiment of the present disclosure, the antenna covers a surface of a structural member by manners of laser printing formation and plating.

The housing substrate is manufactured by a laser printing formation material; and the manners of laser printing formation and plating includes:
printing the antenna by the manner of laser printing formation according to a preset antenna shape on one or more surfaces selected in advance; and
printing the antenna on the surface by plating.

The antenna and the integrated chip are welded together by a manner of cold welding.

The housing substrate in the present embodiment is made of a material with plasticity and a high dielectric constant, a dissolving temperature of which is 180 °C. Connection between the antenna and the electronic tag is realized by the manner of cold welding, and the cold welding can effectively ensure that no destruction is made to them.

In the present embodiment, the antenna and the integrated chip may be provided thereon with a blue or green protection film.

The protection film transmits radio frequency signals in a set frequency band and absorbs frequencies in other wave bands. That is to say, after the antenna and the electronic tag are welded, a special protective film needs to be coated on the outside. The function of the protective film is to protect the antenna and the electronic tag, but the protective film does not absorb the radio frequency signals in the set frequency band. At the same time, the protective film is colored, mainly blue or green, so that a connector housing can meet requirements of a connector standard.

The antenna is an ultra-high frequency antenna; the indication load is a light emitting diode; the integrated chip is a passive radio frequency identification RFID tag chip; and the housing substrate is made of a material with plasticity and a high dielectric constant. The housing substrate is made of a material with plasticity and a high dielectric constant formed by laser printing.

In the present embodiment, selecting a suitable high dielectric constant enables designing a size of the antenna within a size of the housing. The plasticity means that the material may be printed into a structural member of an optical fiber connector housing through a mold; and the high dielectric constant generally refers to a dielectric constant of not less than 9.

In another embodiment of the present disclosure, the size of the antenna is determined by gain of the integrated chip and directivity needed by the electronic tag.

In further another embodiment of the present disclosure, the load interface includes a ground interface and a power supply interface; a positive electrode and a negative electrode of the indication load are respectively connected to the ground interface and the power supply interface by welding.

In still another embodiment of the present disclosure, the integrated ship includes a control chip and an energy storage chip. The energy storage chip receives energy by means of the antenna. The control chip receives a control instruction of a reader-writer by means of the antenna, and turn on (lighten) or turn off the indication load according to the control instruction.

The energy storage chip, when receiving radio frequency signals by means of the antenna, converts the radio frequency signals into energy needed by the electronic tag; and
the control chip includes a control management unit, a drive unit and a storage unit;
the storage unit stores a computer program which implements the following steps when executed by the control management unit:
receiving the control instruction of the reader-writer by means of the antenna; and
giving a drive instruction to the drive unit according to the control instruction, so that the drive unit turns on or turns off the indication load based on the drive instruction.

The energy storage chip is a capacitor; the storage unit further stores a tag identification; and giving a drive instruction to the drive unit according to the control instruction, so that the drive unit turns on or turns off the indication load based on the drive instruction includes:
parsing out the tag identification from the control instruction; and
giving, after the tag identification parsed out is consistent with a tag identification stored, the drive instruction to the drive unit according to the control instruction, so that the drive unit turns on or turns off the indication load based on the drive instruction.

It is certain that before or after the control instruction of the reader-writer is received by means of the antenna, the following step may be further implemented:
sending tag identification information of the electronic tag to the reader-writer.

The tag identification may be an ID identification (identification number), and the ID identification of each electronic tag is globally unique.

For example, referring to Fig. 1, the electronic tag in the present embodiment includes three modules, i.e., an antenna, an RFID chip and an LED (light emitting diode). The RFID chip forms a passive electronic tag. An antenna connection wire serves as a part of the antenna.

The antenna is attached to a printed structural member with a high dielectric constant (i.e., a housing substrate of an optical fiber connector), so that a size of the antenna is abruptly reduced. The structural member, as a part of the optical fiber connector, serves to support a removable connector. There is no need to design a PCB (printed circuit board) board special for the antenna and add a package structural member in subsequent procedures, which simplifies the process, reduces the cost, and shortens the manufacture time.

For the LED, an LED with a currently smallest package is used, i.e., 0402 package having a length of 1 mm and a width of 0.5 mm. The LED with a small package may be easily mounted on the structural member, and may be applied to a visual passive RFID tag because power dissipation of the LED with the small package is low.

The RFID chip includes four units. A power supply management unit converts energy received by a radio frequency antenna into energy needed by the tag; a control management unit processes signals, and control a corresponding unit to complete corresponding work according to requirements of a control instruction; a drive unit (which may be an LED drive unit in the present embodiment) lightens or turns off an LED lamp according to a drive instruction; and lastly, a storage unit (which may be an ID storage unit in the present embodiment) stores computer programs, ID information and some user information.

Fig. 2 is a schematic diagram of a structure of an existing optical fiber connector.

Fig. 3 is a printed optical fiber connector housing with a high dielectric constant. The only difference is that original uneven surfaces on a bottom and two sides are changed to smooth surfaces for printing the antenna thereon. An original size of an optical fiber connector housing is kept unchanged as much as possible for this structural housing. That is, a length, a width and a height are respectively 25 mm, 9 mm and 7 mm. Only in some special cases, the length may be appropriately extended under the condition that the width and height are not changed according to requirements at a back position where no window is arranged. An overall extension is more than 1 cm. That is, the length may be extended from original 25 mm to 40 mm at most. In the present disclosure, a designed antenna is printed on a bottom of the housing at a bottom area of the formed housing with a high dielectric constant by using a new type of technology of laser printing formation (LDS, laser direct structure) in combination with a plating technology. Then, the RFID chip and the LED chip are connected to the antenna by cold welding. At last, a layer of blue or green protection film is coated on a surface of the antenna, so as to prevent the antenna from being scratching or prevent the chip from falling off. A protection coating of the antenna does not affect radio frequency working performance of the antenna. Blue and green are chosen according to requirements of an optical fiber connector standard, which has strict stipulation to the color of the removable optical fiber connector. Blue indicates that an optical fiber ceramic port is a vertical surface, and green indicates that the port has a surface included angle of 9 degree.

This housing with a lightening tag is suitable to be applied to both types of the optical fiber connector.

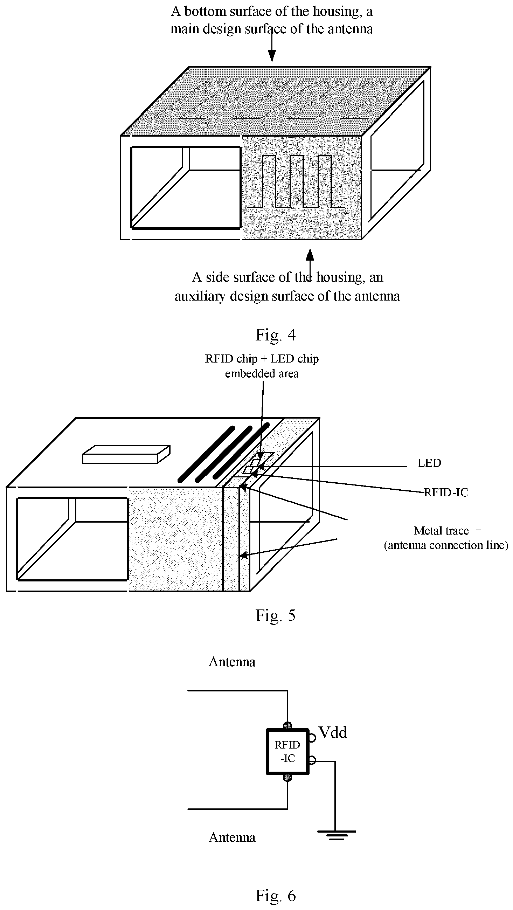

Fig. 4 is a printed optical fiber connector housing with a high dielectric constant. An LDS technology is used to print the antenna on a bottom and a side. The main purpose of printing the antenna on the side is to increase a receiving area of the antenna and radio frequency energy received and improve a directional pattern of antenna reception. That is, the optical fiber connector housing is not sensitive to a transmission position and a transmission direction of the reader-writer. Sensitivity of tag reception is increased.

Fig. 5 is an optical fiber connector housing with an electronic tag. The optical fiber connector housing is a removable optical fiber connector housing formed by a material having a high dielectric constant through a mold. A shape of the antenna is directly printed on a bottom or on the bottom and a side by using a laser direct structure (LDS) technology, so as to realize an integrated formation of the antenna and the housing. Then, an opening is arranged on the housing, and an RFID chip and an LED chip are embedded thereon. After that, the RFID chip and the antenna are connected together by an SMT cold welding technology. At last, the antenna and the chip are integrally packaged with the housing by using a packaging technology, so as to realize integration of the electronic tag and a removable connector housing.

The housing with a tag may be applied as follows. An existing removable optical fiber connector housing may be replaced with this removable connector housing with an intelligent tag. In this way, an ordinary removable optical fiber connector is changed to a removable connector with an intelligent tag, and the connector may be quickly marked and identified, which greatly facilitates changing a dumb resource such as the optical fiber connector, by an operator, to a bright resource that may be identified and marked.

Meanwhile, if the removable optical fiber connector is damaged, generally a ceramic head of an optical fiber is worn. Generally, an entire optical fiber connection head is discarded, and another optical fiber connection head is used. However, for a connection head of a tag, the cost is too high. Only a ceramic fiber core is damaged, and a housing is still intact. Therefore, the housing with a tag may be removed for reuse. That is, the housing with the tag may be used on another removable optical fiber connector. Therefore, the housing with the tag of the removable optical fiber connector may be reused until its life ends, and the housing with the tag is a relatively environmental element.

Fig. 6 is an RFID chip with a load interface. In the present embodiment, the RFID chip, after receiving energy from the antenna, is able to provide power supply to an external load. For example, the chip has two interfaces, i.e. a ground interface and a power supply interface. Normally, the power supply interface is positive, i.e., Vdd. A maximum voltage provided by the power supply interface does not exceed 3.0 V, and generally the voltage provided is 2.2 V.

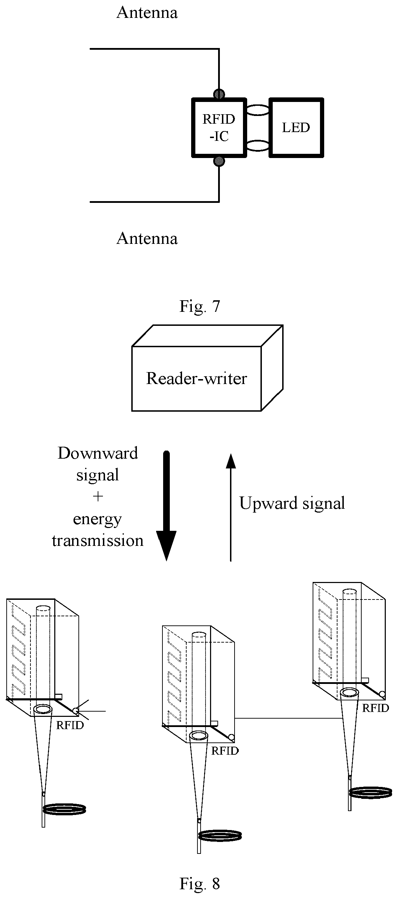

Fig. 7 shows that an RFID chip of the present disclosure is connected to an LED. That is, Fig. 7 shows an RFID chip with an LED. By closely integrating the RFID chip having a load with the LED, energy loss caused by connection of the chip and the LED can be reduced, and meanwhile a volume of the chip and the LED can be reduced. By integrating them together, packaging can also be facilitated, and steps of packaging and errors can be reduced, which reduces cost and provides possibility for subsequent large-scale production.

In the present embodiment, by using a visual RFID tag as a part of an external structural member of an optical fiber connector (a housing), the device is combined with the optical fiber connector organically. Only by changing the structural member with a tag for an ordinary optical fiber connector, the ordinary optical fiber connector may be changed to an optical fiber connector with a lightening tag, so that a dumb resource of the optical fiber connector is changed to a bright resource that can be detected any time.

That is, a management device for a removable optical fiber connector in the present embodiment forms a housing of the removable optical fiber connector, and a structure made of a material with plasticity and a high dielectric constant is used, on which an antenna with an ultrahigh frequency RFID is printed. The 900 MHz frequency band (860 MHz to 960 MHz) and the 2.4 GHz frequency band (2.41 GHz to 2.48 GHz) are mainly directed to, and antenna designs of the device may be slightly different for different frequency bands. The material with a high dielectric constant makes a size of the antenna reduce abruptly. Finally, a binding technology is used to embed an RFID chip and an LED chip on the structural member. The antenna functions to receive radio frequency signals transmitted by a reader-writer and convert the radio frequency signals into energy needed by the RFID chip and an LED lamp, and meanwhile receive a control instruction transmitted by the reader-writer. After receiving the control instruction, a tag chip executes, according to requirements, the corresponding instruction, for example, reporting ID information, or turning on or turning off the LED lamp thereon, etc.

In the present embodiment, an electronic tag of the management device for the removable optical fiber connector has a globally unique ID identification, and the electronic tag has an LED element at the same time. Therefore, a position of the electronic tag may be indicated by lightening the LED lamp. A precise positioning to the position of the tag may be made by human eyes or a camera, so that a function of millimeter-scale precise positioning can be realized.

In the present embodiment, a dimension of the management device for the removable optical fiber connector is basically the same as a dimension of a housing structural member of an original removable optical fiber connector. That is, the device further includes a structural member corresponding to a structure of the optical fiber connector, so as to ensure their interchangeability. In addition, on the basis that the interchangeability with an original housing structural member is not affected, a length of a housing structure may be allowed to appropriately extend. The length may be extended from 23 mm, a length of an existing standard component, to 30 mm, but an ultimate length should be less than 40 mm. The main purpose of doing this is to prepare for some special applications which need a relatively long antenna, and therefore a housing substrate needs to provide enough space to accommodate the antenna. In order to better use the LDS to print the antenna on the substrate, a bottom of the housing is normally selected as a basic surface for antenna printing. In order to better ensure continuity of an LDS printed line, a part of a housing surface of an original housing with an uneven line designed to increase a frictional force when inserting or pulling out is performed by hand will be changed to a corresponding smooth surface. When there is no uneven line, this part may also be used as a section for arranging the antenna. In principle, four surfaces of the housing structural member may all be used as a surface for supporting the antenna. It is not appropriate to use an upper surface as the surface for supporting the antenna. This is because there is a protrusion on the upper surface, and the protrusion serves as a reference object for determining a fixation position so as to accurately insert a connection head into a connector and may not be removed. In this way, there is an area of 9 mm × 23 mm at the bottom of the housing, which may be used as the surface for supporting the antenna. Because of an opening on two sides of the housing, there is an area of 7 mm × 14 mm on each of two sides of the housing, which may be used as the surface for supporting the antenna, and the two sides may be used for an auxiliary antenna of a main antenna. Generally, arranging an antenna only at the bottom meets requirements. In some special cases, if gain of the tag needs to be increased, the auxiliary antenna may be added, and a surface of a side of the housing needs to be used at this time. Besides, one or two apertures (about 1 square millimeter) may be opened at a position of a front surface of the housing closest to an edge for arranging the RFID chip and the LED chip. If the RFID chip and the LED chip are integrated into one piece, only one aperture is needed; and if not, two apertures are needed. The main purpose is to embed these chips on the housing direcly.

That is, the management device for the removable optical fiber connector in the present embodiment forms a housing of an antenna connector, and therefore the housing is made of a material with plasticity and high dielectric constant though a mold. Then, an LDS sensitive material is coated on the surface for supporting the antenna to be printed, and after that an LDS machine is started to use laser to scan a designed antenna pattern of the antenna and a trace to a chip aperture on the LDS sensitive material. Then, the antenna and the trace are printed on the housing by plating according to subsequent LDS working procedures. In order to reduce cost and reduce working procedures and errors, an RFID chip capable of carrying a load is designed specially. After radio frequency energy is received from the antenna, a direct voltage is provided to the load for driving an indication load to operate. In the circumstance of the present disclosure, the indication load is an LED, and it is a load driven by the direct voltage. In order to reduce procedures of subsequent packaging and errors, an optimal solution is to make integrated packaging to the RFID chip and the LED. Then, an integrated chip of the RFID and the LED is arranged at the corresponding chip aperture, and the chip and the trace are welded together by the SMT cold welding. At last, the antenna and the trace are covered with a layer of protection film for protecting the antenna and the trace. At this time, the housing with a tag has been preliminarily formed. Then, the housing is colored corresponding blue or green according to a standard of a removable optical fiber connection head.

After the housing with the tag is completed, the housing with the tag is mounted on an optical fiber connector by a tool. That is, an original optical fiber connector housing is replaced with this structural member having a tag. In this way, the optical fiber connector will become a connector which has a function of precisely positioning the tag. This provides great convenience for a worker to look for a specific optical fiber connector among a bunch of optical fiber connectors. This also facilitates management of dumb resources of these optical fiber connectors. These dumb resources are changed to bright resources, which facilitates management of these optical fibers by a network administrator, effectively uses the resources and eliminates waste.

Referring to Fig. 8, the present disclosure further discloses an optical management system. The system includes a plurality of management devices for a removable optical fiber connector as described above in respective embodiments, a plurality of optical fiber connectors and a reader-writer;
each optical fiber is correspondingly provided with two optical fiber connectors; each optical fiber connector is correspondingly provided with one management device for a removable optical fiber connector; and
the reader-writer is configured to send energy and a control instruction to respective management devices for a removable optical fiber connector.

The management devices for a removable optical fiber connector at two ends of the same optical fiber have associated codes.

In the present disclosure, the system is a 900 MHz ultrahigh frequency RFID system, and an electronic tag in the management device for a removable optical fiber connector is passive. The reader-writer transmits radio frequency electromagnetic waves to provide energy to a tag, and meanwhile send a downward instruction. Each tag has its inherent ID value. The tag sends an upward response in a manner of reflecting a downward signal by changing impedance.

The management device for a removable optical fiber connector includes an LED lamp element, and therefore the reader-writer may control the LED by means of LED_ON, LED_OFF and relevant instructions. For example, the reader-writer requires an intelligent tag having a known ID to turn on the LED thereon. After all intelligent tags receive the instruction, an ID of an intelligent tag is compared with the known ID. If the ID of the intelligent tag is not consistent with the known ID, the instruction is neglected. If the ID of the intelligent tag is consistent with the known ID, the LED lamp on the intelligent tag is turned on to show the position of the intelligent tag. Therefore, it is convenient for a worker to find the optical fiber corresponding to the electronic tag.

How to quickly find a corresponding optical fiber from an optical distribution frame (ODF) with a lot of optical fiber connectors inserted is always a problem.

For the system of the present embodiment, firstly, an optical fiber connecter used is changed, by replacing a housing thereof, to an optical fiber connecter with a management device for a removable optical fiber connecter. Electronic tags on connection heads (i.e., optical fiber connectors) at two ends of the same optical fiber are associated, and the electronic tags are associated by defining a user ID (UID). Although the electronic tags have respective different TIDs (tag IDs), a common ID may be defined. For example, the common ID is defined as optical fiber 1, and the reader-writer sends an instruction of lightening the optical fiber 1 (LED ON). After the electronic tags receives the instruction, the electronic tags on the two optical fiber connectors turn on an LED lamp thereon to show the position thereof and indicate that they are a pair. This basic function enables the worker to quickly perform connection of the optical fiber. For example, for connection of optical fibers between two cabinets, in order to avoid mistakes, one optical fiber is inserted into a port of one cabinet, and then the worker goes to another cabinet to insert another connection head of the optical fiber to a specific port. In this way, if there are dozens of or hundreds of optical fibers to be connected, the work will be cumbersome. However, if optical fiber connectors with paired electronic tags are used, the work will be greatly reduced. The worker may insert all optical fibers to ports of one cabinet at one time, and then goes to another cabinet. A hand-held reader-writer is used to lighten a specific intelligent tag, and an LED lamp on the tag will indicate a position of the tag. In this way, the worker is able to quickly find a right specific optical fiber from a bunch of optical fibers and insert the identified optical fiber to a specific port of another cabinet. All optical fibers may be identified one by one by repeating the above steps, and then are inserted into corresponding ports one by one so as to complete connection of the optical fibers. This function will greatly improve work efficiency and accuracy.

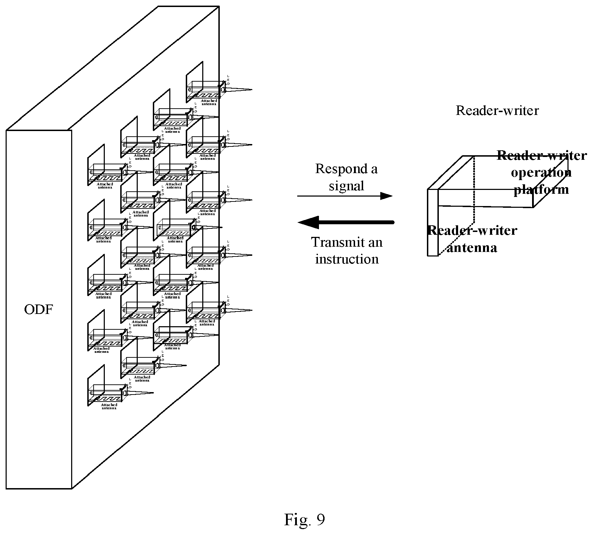

For example, referring to Fig. 9, after all optical fiber connectors are provided with a housing with the management device for a removable optical fiber connector, the worker only needs to hold an intelligent tag reader-writer in hand or arrange a mobile apparatus of the intelligent tag reader-writer in front of the ODF, and turn on the reader-writer to require all intelligent tags to report an ID thereof. The worker compares the ID on a work order with ID data reported, and it can be determined that the ODF is right if the ID on the work order is in a list. In this way, the ID may be required by the reader-writer to lighten the LED thereon. After an instruction is received, an intelligent tag compares the ID of the tag with the ID in the instruction. If the IDs are not consistent, the instruction is neglected; and if the IDs are consistent, the LED lamp on the tag is turned on so as to show the position of the tag. In this way, the worker is able to quickly perform positioning to the ID by means of human eyes, and then troubleshoots the optical fiber according to requirements of the work order.

With respect to quickly finding a corresponding optical fiber, in order to find a specific optical fiber from an ODF cabinet into which a lot of optical fibers are inserted, a traditional manner is that the worker checks a paper tag of each optical fiber, which wastes time and energy. Sometimes, the paper tag may have a problem. For example, the writing on the tag becomes illegible, or the tag may fall off. Then, the optical fiber needs to be determined by other methods. By using the system in the present embodiment, the worker only needs to hold the reader-writer in hand, input an ID to be detected on the work order into the reader-writer, and turn on the reader-writer to search IDs of all intelligent tags on the cabinet. If the ID to be detected exists, an instruction of lightening is sent. After the instruction is received, the intelligent tag compares the ID in the instruction with the ID on the intelligent tag. If the IDs are consistent, the LED lamp on the intelligent tag is lightened to show the position of the intelligent tag; and if the IDs are not consistent, the instruction is neglected. The worker finds and determines the position of the optical fiber by identifying light of the LED via human eyes, so as to maintain the optical fiber according to requirements on the work order, for example, changing the optical fiber or performing repairing.

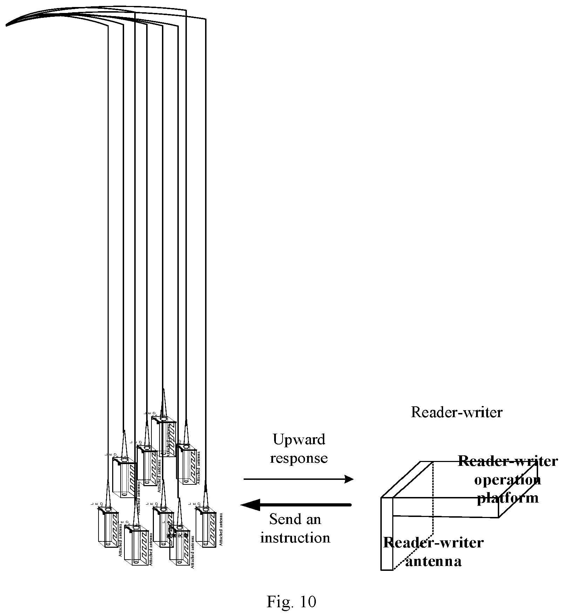

For example, referring to Fig. 10, quickly finding a specific optical fiber among a bunch of optical fibers is also an important working step for optical fiber connection. Previously, if multiple optical fibers need to be connected between two ODFs, in order to ensure accuracy of connection, one end of an optical fiber is connected to one ODF, and then the other end of the optical fiber is connected to the other ODF generally. If the two ODFs are adjacent to each other, it is feasible to use this connection manner. However, it the two ODFs are far from each other, this connection manner is relatively cumbersome. An ideal working manner is that after one end of each of a bunch of optical fibers are connected to one ODF, the other end of each of the bunch of optical fibers are taken to another ODF. At this time, quickly identifying a specific optical fiber is needed. In the present embodiment, the system first matches intelligent tags of two removable connectors of each optical fiber, to which the same user ID, i.e., UID, is implanted. After the UID is input in the reader-writer, the two tags can make responses simultaneously. In this way, when the bunch of optical fibers are taken to another ODF, the worker can use a hand-held reader-writer to send an instruction of lightening a specific intelligent tag to these intelligent tags according to UID number of the optical fiber indicated in the work order. After the instruction is received, an intelligent tag compares the ID of the tag with the ID in the instruction. If the IDs are not consistent, the instruction is neglected; and if the IDs are consistent, the LED lamp on the tag is turned on so as to show the position of the tag. In this way, the worker can quickly find a corresponding optical fiber and connect the optical fiber to the corresponding ODF. By repeating the above method, all optical fibers are found one by one and are connected to the corresponding ODF, so as to complete connection between two apparatuses or two ODFs. By using the intelligent tags, connection of optical fibers by the worker can be greatly facilitated, and working efficiency can be improved.

The device and system in the present embodiment enables a passive electronic tag to acquire energy by means of an antenna, receive a control instruction of a reader-writer based on the acquired energy, and lighten or turn off the indication load according to the control instruction. In this way, a position of an optical fiber can be indicated by means of the indication load; a dumb resource of an optical fiber connection head is changed to a bright resource that can be detected any time; and a millimeter-scale precise positioning can be made to a position of the optical fiber connection head. In the present embodiment, by integrating a management device for a removable optical fiber connector with a housing of an optical fiber connector, the shortcomings of the active ODN management method can be effectively solved. Meanwhile, passivity of an original ODN and a habit of optical fiber insertion and pullout of a user can be kept, and time and labor costs can be saved.

Although the present application describes specific embodiments of the present disclosure, those skilled in the art can design variations of the present disclosure without departing from the concept of the present disclosure. Inspired by the technical concept of the present disclosure and without departing from contents of the present disclosure, those skilled in the art may further make various modifications, which still fall within the protection scope of the present disclosure.

## Claims

1. A management device for a removable optical fiber connector, wherein the device comprises a housing substrate of the optical fiber connector as well as an electronic tag, wherein the electronic tag comprises an antenna, an integrated chip and an indication load, wherein the integrated chip and the indication load are embedded on the housing substrate; the integrated chip is provided with a load interface, and the indication load is connected to the integrated chip by means of the load interface; and the antenna covers one or more pre-selected surfaces on the housing substrate, and is connected to the integrated chip.

2. The device according to claim 1, wherein the antenna covers a surface of a structural member by manners of laser printing formation and plating.

3. The device according to claim 2, wherein the housing substrate is manufactured by a laser printing formation material; and
the manners of laser printing formation and plating comprises:
printing the antenna by the manner of laser printing formation according to a preset antenna shape on one or more surfaces selected in advance; and
printing the antenna on the surface by plating.

4. The device according to claim 1, wherein the antenna and the integrated chip are welded together by a manner of cold welding.

5. The device according to claim 1, wherein the antenna and the integrated chip is provided thereon with a blue or green protection film.

6. The device according to claim 5, wherein the protection film transmits radio frequency signals in a set frequency band and absorbs frequencies in other wave bands.

7. The device according to claim 1, wherein the antenna is an ultra-high frequency antenna; the indication load is a light emitting diode; the integrated chip is a passive radio frequency identification RFID tag chip; and the housing substrate is made of a material with plasticity and a high dielectric constant.

8. The device according to claim 1, wherein a size of the antenna is determined by gain of the integrated chip and directivity needed by the electronic tag.

9. The device according to claim 1, wherein the load interface comprises a ground interface and a power supply interface; a positive electrode and a negative electrode of the indication load are respectively connected to the ground interface and the power supply interface by welding.

10. The device according to any one of claims 1-9, wherein the integrated ship comprises a control chip and an energy storage chip, wherein the energy storage chip receives energy by means of the antenna; and the control chip receives a control instruction of a reader-writer by means of the antenna, and turn on or turn off the indication load according to the control instruction.

11. The device according to claim 10, wherein the energy storage chip, when receiving radio frequency signals by means of the antenna, converts the radio frequency signals into energy needed by the electronic tag; and
the control chip comprises a control management unit, a drive unit and a storage unit,
wherein the storage unit stores a computer program which implements the following steps when executed by the control management unit:
receiving the control instruction of the reader-writer by means of the antenna; and
giving a drive instruction to the drive unit according to the control instruction, so that the drive unit turns on or turns off the indication load based on the drive instruction.

12. The device according to claim 11, wherein the energy storage chip is a capacitor; the storage unit further stores a tag identification; and giving a drive instruction to the drive unit according to the control instruction, so that the drive unit turns on or turns off the indication load based on the drive instruction comprises:
parsing out the tag identification from the control instruction; and
giving, when the tag identification parsed out is consistent with a tag identification stored, the drive instruction to the drive unit according to the control instruction, so that the drive unit turns on or turns off the indication load based on the drive instruction.

13. An optical fiber management system, wherein the system comprises a plurality of management devices according to any one of claims 1-12, a plurality of optical fiber connectors and a reader-writer;
wherein each optical fiber is correspondingly provided with two optical fiber connectors, either of which is correspondingly provided with one optical fiber management device; and
the reader-writer is configured to transmit energy and a control instruction to respective management devices.

14. The system according to claim 13, wherein management devices at two ends of a same optical fiber have associated codes.
